# EUROPÄISCHE PATENTSCHRIFT

(11) **EP 1 379 905 B1**
(45) Veröffentlichungstag und Bekanntmachung des Hinweises auf die Patenterteilung: **23.05.2007**
(21) Anmeldenummer: 02750520.5
(22) Anmeldetag: 14.03.2002
(51) Int. Cl.: G02B 6/42

(54) **Verfahren zur Herstellung eines optoelektronischen Sendemoduls**
Method for the production of an optoelectronic emission module
Procédé de production d'un module d'émission optoélectronique

(30) Priorität: 14.03.2001 DE 10112274
(43) Veröffentlichungstag der Anmeldung: 14.01.2004
(73) Patentinhaber: Finisar Corporation, Sunnyvale, CA 94089-1133 (US)
(72) Erfinder: HÜBNER, Bernd, 82049 Pullach (DE)
(74) Vertreter: Meissner, Bolte & Partner
(86) Internationale Anmeldenummer: PCT/DE2002/000906
(87) Internationale Veröffentlichungsnummer: WO 2002/073276

(56) Entgegenhaltungen:
- EP-A- 0 569 181
- DE-A- 3 335 529
- FR-A- 2 661 005
- FR-A- 2 698 453
- FR-A- 2 698 485
- US-A- 5 121 457
- US-A- 5 617 495
- US-A- 5 960 141
- PATENT ABSTRACTS OF JAPAN vol. 2000, no. 10, 17. November 2000 (2000-11-17) & JP 2000 187136 A (SUMITOMO ELECTRIC IND LTD), 4. Juli 2000 (2000-07-04)
- BERND HÜBNER ET AL: 'Laser Diodes with Integrated Spot-Size Transformer as Low-Cost Optical Transmitter Elements for Telecommunications' IEEE JOURNAL OF SELECTED TOPICS IN QUANTUM ELECTRONICS Bd. 3, Nr. 6, 06 Dezember 1997, Seiten 1372 - 1383
- ZENGERLE R. ET AL: 'MODULATION CHARACTERISTICS OF A DFB-LASER WITH INTEGRATED SPOT-SIZE CONVERTER FOR EFFICIENT LASER FIBRE COUPLING' PROCEEDINSG OF THE 8TH INTERNATIONAL CONFERENCE ON INDIUM PHOSPHIDE AND RELATED MATERIALS, 21- 25.APRIL 1996,SCHWCBISCH-GMÜND 21 April 1996, Seiten 380 - 383

## Beschreibung

Die Erfindung betrifft ein Verfahren zur Herstellung eines optoelektronischen Sendemoduls.

Optoelektronische Sendemodule, insbesondere Lasermodule, umfassen in der Regel ein Gehäuse, in welchem neben dem eigentlichen optischen Sendeelement, beispielsweise dem Laserchip oder einem LED-Chip zumindest ein Teil der Ansteuerelektronik enthalten ist. Eine mechanisch und thermisch stabile Ankopplung des optischen Sendeelements an einen Lichtwellenleiter wird dadurch erreicht, dass ein Pigtail mit dem Gehäuse fest verbunden ist. Hierzu wird das Einkoppelende des Lichtwellenleiters entweder in das Gehäuse hinein geführt und mit seiner Stirnfläche so vor dem optischen Sendeelement positioniert, dass sich ein optimaler Koppelwirkungsgrad ergibt. Ein derartiger Aufbau wird beispielsweise für Pump-Lasermodule verwendet, wobei vorzugsweise an der Stirnseite des Einkoppelendes eine zylindrische Linse ausgebildet ist.

Das Einkoppelende ist in einer Metallferrule gehalten, welche bei der Montage des Lasermoduls im Gehäuse vor dem bereits darin montierten Laserchip mittels einer automatischen Justiereinrichtung so lange justiert wird, bis ein optimaler Koppelwirkungsgrad erreicht ist. Nach dem optimalen Positionieren wird die Metallferrule mittels eines Laserschweißprozesses und einem Halteelement fixiert.

Das Halteelement ist sattelförmig ausgebildet, wobei zwei sattelförmige Bögen die Metallferrule des Einkoppelendes umgreifen und zwei rechtwinklig nach außen abgebogene Auflageflächen auf dem Boden des Gehäuses aufliegen. Die Auflageflächen werden zur Montage des Einkoppelendes nach dem Erreichen der optimalen Position mit dem Gehäuseboden verschweißt und anschließend die Metallferrule mit dem sattelförmig ausgebildeten Halteteil.

Nachteilig bei einem derartigen optischen Sendemodul ist, dass die komplette Montage der einzelnen Elemente des Moduls im Gehäuse erfolgen muss. Dies erfordert insbesondere ein aufwändig ausgebildetes Positionierwerkzeug für das Positionieren der Metallferrule, in welche das Einkoppelende des Lichtwellenleiters eingebettet ist. Des Weiteren muss das Verschweißen des Halteteils und der Metallferrule mit dem Gehäuse im Gehäuse selbst erfolgen, wobei dies in Folge beengter Platzverhältnisse im Gehäuse mit entsprechenden Schwierigkeiten verbunden ist. Zudem sind praktisch nur die Oberseite bzw. die oberen seitlichen Bereiche der Metallferrule für den Schweißvorgang zugänglich. Ein Verschweißen auch der unteren Bereiche bzw. der Unterseite der Metallferrule für das Erreichen einer möglichst stabilen Halterung der Ferrule ist daher nur schwer erreichbar.

Ein weiteres Problem bei derart aufgebauten Laser-Sendemodulen besteht in der hermetischen Abdichtung der Durchführung des Pigtails durch das Gehäuse. Auf eine hermetische Abdichtung kann insbesondere deshalb kaum verzichtet werden, da ansonsten die Gefahr besteht, dass der Koppelwirkungsgrad zwischen dem optischen Sendeelement und dem Einkoppelende des Lichtwellenleiters durch Umwelteinflüsse, insbesondere Feuchtigkeit, beeinträchtigt wird.

Des Weiteren sind optoelektronische Sendemodule bekannt, bei denen das optische Sendeelement in einem hermetisch verschlossenen Gehäuse angeordnet ist, wobei das Licht des Sendeelements durch ein im Gehäuse vorgesehenes hermetisch abgedichtetes Fenster aus dem Gehäuse austritt. An der Außenseite des Gehäuses ist dann wiederrum die Stirnseite des Einkoppelendes des Lichtwellenleiters in einer Position fixiert, in welcher der optimale Koppelwirkungsgrad gewährleistet ist. Nachteilig bei dieser Ausführungsform ist der Aufwand für die erforderliche Koppeloptik zwischen der lichtemittierenden Fläche des optischen Sendeelements und der außerhalb des Gehäuses positionierten Stirnseite des Einkoppelendes des Lichtwellenleiters.

Aus der FR 2661005 und FR 2698485 ist das Vorkonfektionieren von Teilmodulen mit Positionier-und Fixierelement sowie Träger bekannt. In diesen Dokumenten wird ein Lichtwellenleiterende aktiv gegenüber einem Sendemodul justiert und in seinem Positionier-und Fixierelement befestigt, welches wiederum am Träger mit dem Sendeelement fixiert wird. Ein ahnliches Verfahren zur Montage eines Teilmoduls ist aus JP 2000187136 bekannt : Hier wird der Lichtwellenleiter aktiv gegenüber dem Träger und seinem Fixier- und Positionierelement entlang der optischen Achse justierts, in diesem befestigt, worauf die laterale Justage entlang der Anschlagsflächen folgt.

Der Erfindung liegt ausgehend von dem eingangs genannten Stand der Technik die Aufgabe zugrunde, ein Herstellungsverfahren für ein optoelektronisches Sendemodul zu schaffen, das gewährleistet, dass das Sendemodul möglichst einfach und kostengünstig montiert werden kann.

Die Erfindung löst diese Aufgabe mit dem Merkmalen des Patentanspruchs 1.

Durch das Anordnen des wenigstens einen optischen Sendeelements und das Fixieren des Einkoppelendes des wenigstens einen Lichtwellenleiters auf einem gemeinsamen Trägerelement ergibt sich der Vorteil, dass dieses Teilmodul außerhalb des Gehäuses montiert und geprüft sowie einem Burn-In-Test unterzogen werden kann. Das Montieren außerhalb des Gehäuses vereinfacht die hierzu erforderlichen Verfahrensschritte, insbesondere das Positionieren und Fixieren des Einkoppelendes des Lichtwellenleiters.

Des Weiteren wird der Vorteil erreicht, dass nur funktionsfähige Teilmodule in ein Gehäuse montiert werden. Während bei bekannten Sendemodulen die Montage im Gehäuse erfolgt und bei Fehlschlagen eines Verfahrensschritts das gesamte bisher gefertigte Modul einschließlich Gehäuse als Ausschuss entsorgt werden muss, besteht bei dem erfindungsgemäßen Sendemodul bzw. Herstellungsverfahren die Möglichkeit, nur den betreffenden Teil des außerhalb des Gehäuses hergestellten Teilmoduls als Ausschuss entsorgen zu müssen. Da Gehäuse, insbesondere Gehäuse mit einem darin bereits integrierten bzw. montierten Peltierelement einen wesentlichen Teil der Kosten eines fertigen Sendemoduls verursachen, ergibt sich bei der Fertigung erfindungsgemä-ßer Sendemodule ein entsprechender Kostenvorteil.

Nach der bevorzugten Ausführungsform der Erfindung besteht das gemeinsame Trägerelement aus einem gut wärmeleitenden Material, beispielsweise Wolfram-Kupfer. Das Trägerelement kann auf diese Weise die vom optischen Sendeelement bzw. der Ansteuerelektronik erzeugte Wärme gut an das Gehäuse abgeben bzw. an das unter dem Trägerelement angeordnete Peltierelement.

Nach der bevorzugten Ausführungsform der Erfindung ist das optische Sendeelement und die Ansteuerelektronik einschließlich der erforderlichen Strompfade bzw. Leiterbahnen auf einem Substrat angeordnet. Das Substrat kann beispielsweise aus Keramik oder Silizium bestehen. In der Erfindung ist das Lichtwellenleiterende in einem Positionier-und Fixierelement gehalten, das zur axialen Positionierung der Stirnseite des Lichtwellenleiterendes eine Anschlagsfläche aufweist, die mit einer am Trägerelement ausgebildeten Anschlagsfläche zusammenwirkt. Hierdurch ergibt sich der Vorteil, dass nach einem genauen Ablängen des Einkoppelendes des Lichtwellenleiters in Bezug auf die Anschlagsfläche des Positionier-und Fixierelements ein axiales Ausrichten des Einkoppelendes entfallen kann.

In einer Ausführungsform der Erfindung umfasst das Positionier-und Fixierelement eine Ferrule, die aus Glas oder Metall bestehen kann, in welcher das Einkoppelende gehalten, beispielsweise eingeklebt ist. Die Anschlagsfläche für das axiale Positionieren kann am Außenumfang der Ferrule ausgebildet sein.

Nach der bevorzugten Ausführungsform der Erfindung umfasst das Positionier- und Fixierelement ein Aufnahmeteil, welches die Anschlagfläche für das axiale Positionieren definiert und welches eine Ausnehmung bzw. Bohrung aufweist, in welcher die Ferrule gehalten, vorzugsweise eingepresst ist.

Hierdurch ergibt sich eine mechanisch und thermisch stabile sowie langzeitstabile Halterung für das Einkoppelende.

Nach einer nichterfindungsgemäßen Ausführungsform kann das Einkoppelende des wenigstens einen Lichtwellenleiters direkt auf dem Substrat vor der lichtemittierenden Fläche des wenigstens einen optischen Sendeelements angeordnet sein. Hierzu kann im Substrat wenigstens eine V-Nut zur Aufnahme und Positionierung des Einkoppelendes ausgebildet sein. Vorteilhaft hierbei ist, dass eine schnelle und einfache Positionierung des Einkoppelendes gewährleistet werden kann. Vorraussetzung hierfür ist jedoch die genaue Positionierung des optischen Sendeelements auf dem Substrat sowie das hochgenaue Herstellen der V-Nut (En).

Selbstverständlich kann die Positionierung des wenigstens einen Einkoppelendes mittels V-Nuten auch bei der Verwendung eines Positionier-und Fixierelements eingesetzt werden. Anstelle einer Ferrule wird das Einkoppelende hierbei direkt in die betreffende V-Nut eingelegt und fixiert, beispielsweise mit einem Fixierelement (beispielsweise eine Platte) beaufschlagt und/oder verklebt.

Nach der bevorzugten Ausführungsform der Erfindung wird auf eine Kuppeloptik zwischen der lichtemittierenden Fläche des wenigstens einen optischen Sendeelements und der Stirnfläche des betreffenden Einkoppelendes verzichtet. Dies gilt auch für ein linsenförmiges Ausbilden der Stirnfläche des Einkoppelendes. Hierdurch kann nach der bevorzugten Ausführungsform der Erfindung zumindest der Raum zwischen der emittierenden Fläche des optischen Sendeelements und der Stirnfläche des Einkoppelendes mit einem transparenten Material, vorzugsweise einer transparenten Vergussmasse, ausgefüllt werden. Das damit einhergehende Immertieren wirkt sich infolge der fehlenden Koppeloptik nicht nachteilig auf den Strahlengang aus. Vielmehr ergibt sich hierdurch der Vorteil einer Verringerung der Divergenz des vom optischen Sendeelement abgestrahlten Lichts und eine Reduzierung der an den Grenzflächen reflektierten Lichtleistung.

Um ohne eine Koppeloptik auskommen zu können, wird als optisches Sendeelement vorzugsweise ein Halbleiterlaser-Chip verwendet, welcher eine im Chip integrierte Fleckaufweitung mittels einer Taperstruktur aufweist (Taperlaser). Durch die Fleckaufweitung wird die emittierende Fläche des Lasers an den Fleckradius des Lichtwellenleiters angepasst. Gleichzeitig wird die Divergenz des abgestrahlten Lichts reduziert und ebenfalls an die numerische Apparatur des Lichtwellenleiters angepasst.

Wird als transparentes Material eine mechanisch langzeitstabile Vergussmasse gewählt, so ergibt sich hierdurch der Vorteil einer derartigen Kapselung des Koppelbereichs zwischen dem optischen Sendeelement und dem Einkoppelende. Auf diese Weise kann bei einem Sendemodul nach der Erfindung auf eine vollständig hermetische Abdichtung des Gehäuses verzichtet werden. Dies ermöglicht es beispielsweise, die Durchführung des Lichtwellenleiters durch die Gehäusewandung einfach durch das Einkleben des Lichtwellenleiters und eine entsprechende mechanische Stabilisierung des sich an die Außenwandung des Gehäuses anschließenden Bereichs des Lichtwellenleiters herzustellen. Hierdurch ergibt sich somit ein einfacher und kostengünstiger Aufbau des Sendemoduls.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen
- Fig. 1: eine perspektivische schematische Ansicht eines noch offenen optischen Sendemoduls;
- Fig.2: eine Darstellung ähnlich Fig. 1 eines Sendemoduls,
- Fig.3: eine perspektivische schematische Darstellung eines außerhalb des Gehäu-ses hergestellten Teilmoduls der Fig.2 und
- Fig. 4: eine perspektivische, schematische Darstellung eines Teilmoduls für eine dritte Sendemodul.

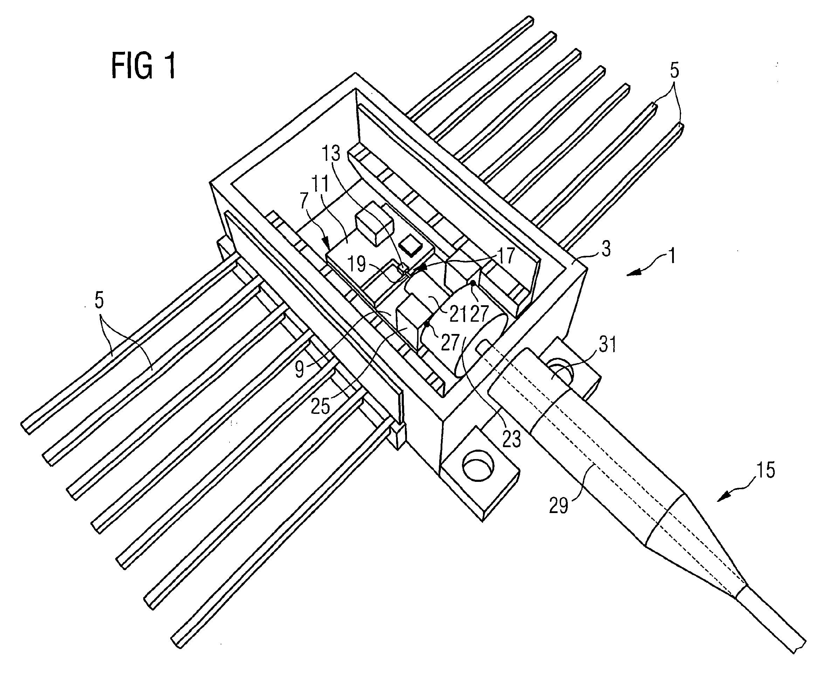

Das in Fig. 1 dargestellte optoelektronische Sendemodul 1 umfasst ein Gehäuse 3, welches bei dem dargestellten Ausführungsbeispiel als Butterfly-Gehäuse ausgebildet ist. Selbstverständlich kann jedoch auch jede andere Gehäuseform verwendet werden. Das Gehäuse 3 weist sich jeweils seitlich nach außen erstreckende Anschlusskontakte 5 für das Zuführen und/oder Abführen elektrischer Signale oder das Zuführen elektrischer Energie auf. Im Gehäuse 3 ist ein Teilmodul 7 angeordnet, das ein Trägerelement 9 umfasst. Auf dem Trägerelement 9 ist ein Substrat 11 angeordnet, welches beispielsweise aus Keramik bestehen kann. Das Substrat 11 kann beispielsweise mit dem Trägerelement 9 verklebt oder auf andere Weise fest mit diesem verbunden sein.

Auf dem Substrat 11 ist ein optisches Sendeelement 13 so angeordnet, dass die lichtemittierende Fläche des Sendeelements 13 im Wesentlichen bündig mit einer Außenseite des Substrat 11 abschließt. Neben dem optischen Sendeelement 13, das als Laserchip, insbesondere Tape-Laser-Chip ausgebilde sein kann, können weitere Bauelemente der elektronischen Ansteuerung für das optische Sendeelement 13 auf dem Substrat 11 angeordnet sein. Dies gilt selbstverständlich auch für die Leiterbahnstrukturen zur Kontaktierung der Bauelemente. Die Kontaktierung der auf dem Substrat 11 angeordneten Bauelemente kann in üblicher Weise durch Bonden erfolgen, wobei entsprechende Anschlusskontaktflächen auf dem Substrat 11 mit im Gehäuse vorgesehenen Anschlusskontaktflächen der Anschlusskontakte 5 verbunden werden.

Für das Einkoppeln des vom optischen Sendeelement 13 emittierten Lichts in das Einkoppelende 19 eines Lichtwellenleiters 17 eines Pigtailes 15 muss das Einkoppelende 19 mit seiner Stirnfläche exakt vor der lichtemittierenden Fläche des optischen Sendeelements 13 positioniert und fixiert werden. Hierzu ist das Einkoppelende 19 bei der in Figur 1 dargestellten Ausführungsform eines optoelektronischen Sendemoduls 1 in einer Ferrule 21, beispielsweise einer Glasferrule gehalten. Das Einkoppelende 19 kann hierzu in die axiale Bohrung der Ferrule 21 eingeklebt sein. Die Ferrule 21 und ein Aufnahmeteil 23 bilden ein Positionier- und Fixierelement 25 für das Einkoppelende 19.

Das Aufnahmeteil 23 kann ringförmig ausgebildet sein, wobei die Ferrule 21 im Aufnahmeteil 23 gehalten, vorzugsweise eingepresst ist.

Das Herstellen des Positionier- und Fixierelements für das Einkoppelende 19 erfolgt, ebenso wie das Anordnen des Substrats 11 auf dem Trägerelement 9 und den Bauelementen auf dem Substrat 11, außerhalb des Gehäuses 3. Diese beiden Teileinheiten werden, ebenfalls noch außerhalb des Gehäuses, so miteinander verbunden und fixiert, dass die Stirnfläche des Einkoppelendes 19 optimal vor der lichtemittierenden Fläche des optischen Sendelements 13 positioniert ist. Für das Positionieren des Einkoppelendes 19 in axialer Richtung vor dem optischen Sendeelement 13 dient die vordere Stirnseite des ringförmigen Aufnahmeteils 23 als Anschlagfläche, welche mit einer entsprechenden Anschlagfläche an der Stirnseite des Trägerelements 9 zusammenwirkt. Das Trägerelement 9 weist hierzu an seinem vorderen Bereich einen im Querschnitt U-förmigen Bereich auf, wobei dessen Stirnseite die betreffende Anschlagfläche definiert.

Während der rückwärtige Bereich des Trägerelements 9, auf welchem das Substrat 11 angeordnet ist, aus einem gut wärmeleitenden Material besteht, beispielsweise aus Kupfer, kann der vordere U-förmige Bereich des Trägerelements 9 aus einem Material bestehen, dass sich gut mit dem ringförmigen Aufnahmeteil 23 verschweißen lässt. Als Material für den U-förmigen Bereich und das Aufnahmeteil 23 eignet sich beispielsweise Covar. Das Verbinden des U-förmigen vorderen Bereichs des Trägerelements 9 mit dessen rückwärtigem Bereich kann beispielsweise durch Löten oder Verschweißen erfolgen.

Das Herstellen des Positionier- und Fixierelements 25 erfolgt derart, dass die Stirnfläche des Einkoppelendes 19 des Lichtwellenleiters 17 einen exakt definierten Abstand zur Anschlagfläche des Aufnahmeteils 23 aufweist. Dies erfolgt dadurch, dass das Einkuppelende 19 nach dem Verbinden der Bestandteile des Positionier- und Fixierelements 25 exakt abgelängt wird. Dies kann beispielsweise durch Lasertrennen des Einkoppelendes 19 erfolgen.

Auf diese Weise wird erreicht, dass keinerlei Justiervorgang des Einkoppelendes 19 in seiner axialen Richtung durchgeführt werden muss. Es ist lediglich ein Justieren des Einkoppelendes 19 in den beiden transversalen Achsen, d.h. in radialer Richtung, nötig. Das Justieren des Positionier- und Fixierelements 25 in Bezug auf die lichtemittierende Fläche des optischen Sendeelements 13 kann, wie bereits ausgeführt, ebenfalls außerhalb des Gehäuses 3 erfolgen. Der Justiervorgang erfolgt vorzugsweise mittels einer automatischen Justiereinrichtung. Das Justieren kann beispielsweise derart erfolgen, dass das optische Senderelement 13 angesteuert wird und die in das Einkoppelende 19 eingekoppelte Lichtleistung am Ende des Lichtwellenleiters 17 des Pigtailes 15 dedektiert wird. In der Position, in der sich die maximale Transmission ergibt (bei Anlage der Anschlagfläche des Aufnahmeteils 23 und des Trägerelements 9) wird dann diese optimale Position durch Laserverschweißen des Aufnahmeteils 23 mit dem U-förmigen Bereich des Trägerelements 9 fixiert.

Da das Verschweißen dieser beiden Teile außerhalb des Gehäuses erfolgt, damit diese Teile über den gesamten Umfang zugänglich sind, können beispielsweise zwei Schweißpunkte U 27 im oberen Bereich der U-Schenkel des Trägerelements 9 gesetzt werden und ein dritter Schweißpunkt (nicht dargestellt) in der Mittelebene des Teilmoduls 7 im unteren Bereich des Aufnahmeteils 23 bzw. des U-förmigen Bereichs des Trägerelements 9. Hierdurch ergibt sich eine mechanisch langzeitstabile Drei-Punktschweißverbindung.

Nach dem Herstellen des Teilmoduls 7 kann dieses weiteren Prüfungen unterzogen werden bzw. ein Burn-In-Test durchgeführt werden.

Erst wenn gesichert ist, dass das Teilmodul eben in gewünschter Weise voll funktionsfähig ist, erfolgt die Montage in das Gehäuse 3. Hierzu wird das Pigtaile 15 durch eine Bohrung 29 im Gehäuse 3 gezogen, wobei sich die Bohrung 29 auch durch einen zylindrischen Fortsatz 31 erstreckt, der an der Außenwandung des Gehäuses 3 vorgesehen ist. Anschließend wird das Teilmodul 7 mit der Unterseite des Trägerelements 19 mit dem Gehäuseboden oder einem bereits im Gehäuse angeordneten Peltier-Element verbunden, beispielsweise verklebt.

Anschließend wird das Pigtail 15 in die Bohrung 29 des Gehäuses 3 eingeklebt und die Durchführung des Pigtails 15 auf diese Weise abgedichtet. Anschließend wird üblicherweise eine mechanische Fixierung des Pigtailes, beispielsweise in Form eines Schrumpfschlauchs oder dergleichen aufgebracht.

In einem letzten Schritt wird das Gehäuse durch das Aufbringen eines Deckels (nicht dargestellt) verschlossen.

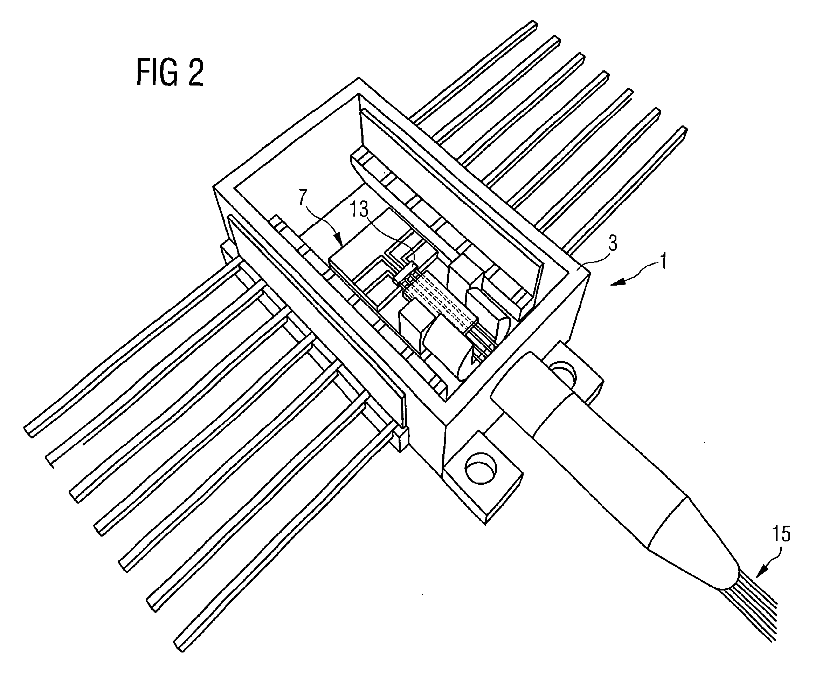

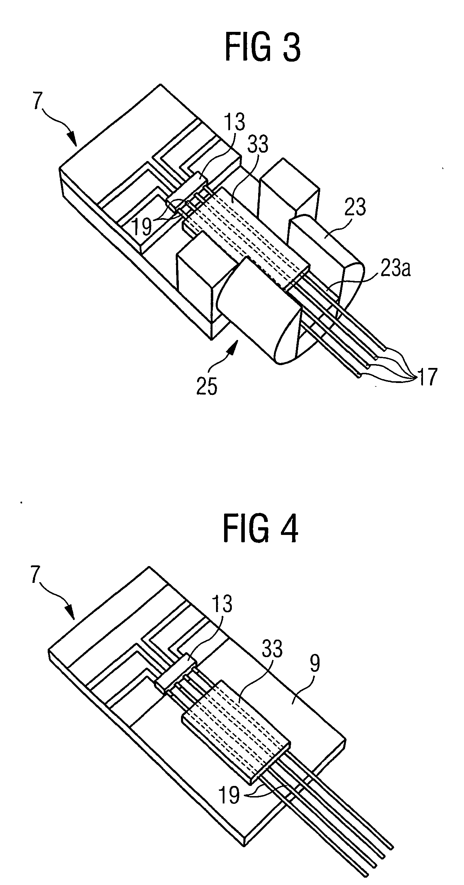

Das in Figur 2 dargestellte optoelektronische Sendemodul 1 entspricht im Wesentlichen der Ausführungsform in Figur 1. Es unterscheidet sich jedoch darin, dass das Pigtail 15 anstelle eines einzigen Lichtwellenleiters vier Lichtwellenleiter umfasst. Des Weiteren handelt es sich bei dem optischen Sendeelement 13 um ein Vierfach-Sendeelement. Hierzu kann ein einziger Chip mehrere Laser umfassen, die wiederum im Wesentlichen identisch ausgebildet sind. Das Teilmodul 7 der Figur 2 ist isoliert in Figur 3 dargestellt. Wie aus Figur 3 ersichtlich, ist das Aufnahmeteil 23 als im Wesentlichen zylindrisches Teil ausgebildet, welches einen radialen Einschnitt gewünschter Breite aufweist. In diesem Einschnitt ist eine Platte 23 a gehalten, die sich über die die Anschlagfläche bildende Stirnseite des Aufnahmeteils 23 in Richtung auf das optische Sendeelement 13 hinauf erstreckt. In der Oberfläche der Platte 23a sind vier parallel verlaufende V-Nuten ausgebildet, welche zur Führung und Fixierung der Einkoppelenden 13 der Lichtwellenleiter 17 dienen. Die Platte 23a kann mit dem Boden des Einschnitts des Aufnahmeteils 23 verklebt oder verschweißt sein. Das Fixieren der Einkoppelenden 19 in den V-Nuten der Platte 23 a kann beispielsweise dadurch erfolgen, dass über die Einkoppelenden 19 eine Fixierplatte 33 gelegt wird, die mit ihrer Unterseite die Einkoppelenden 19 beaufschlagen. Die Fixierplatte 33 kann mit der Platte 23 a und den Einkoppelenden 19 verklebt werden.

Nach dem Fixieren der Einkoppelenden 19 im Aufnahmeteil 23 werden diese wiederum auf eine definierte Länge bezogen auf die Anschlagsfläche des Aufnahmeteils 23 abgelängt.

Das Justieren des derart ausgebildeten Positionier- und Fixierelements 25 in Bezug auf die vier lichtemittierenden Flächen des vierfach optischen Sendeelements 13 erfolgt wiederum in radialer Richtung (vorzugsweise einer ersten Achse in Richtung der Verbindungsgeraden der vier lichtemittierenden Flächen und einer zweiten Achse senkrecht hierzu) und zusätzlich durch ein Drehen um die Längsachse des Aufnahmeteils 23. Der Justiervorgang erfolgt analog zu der in Verbindung mit Figur 1 beschriebenen Ausführungsform. Selbstverständlich können für den Justiervorgang zwei, drei, oder alle vier Laser angesteuert werden.

Figur 4 zeigt ein nichterfindungsgemäßes Teilmodul 7, bei dem das Trägerelement 9 durch ein Substrat gebildet wird, auf dem einerseits das optische Sendeelement 13 und weitere Bauelemente für die Ansteuerung des optischen Sendeelements 13 angeordnet sind und andererseits die Einkoppelenden 19 in bereits auf dem Trägerelement 9 ausgebildeten V-Nuten geführt und fixiert sind. Das Befestigen der Einkoppelenden 19 kann wiederum mittels einer Fixierplatte 33 in der vorbeschriebenen Weise erfolgen.

## Patentansprüche

1. Verfahren zur Herstellung eines optoelektronischen Sendemoduls, welches folgende Schritte aufweist:
a) ein Trägerelement (9) wird außerhalb eines Gehäuses (3) mit wenigstens einem optischen Sendeelement (13) und wenigstens einem, in einem Positionier- und Fixierelement (25) gehaltenen Einkoppelende (19) eines Lichtwellenleiters (17) zu einem Teilmodul (7) vorkonfektioniert,
b) wobei das wenigstens eine Einkoppelende (19) zunächst so im Positionier- und Fixierelement (25) fixiert wird,
c) anschließend wird zur axialen Positionierung des wenigstens einen Einkoppelendes (19) in Bezug auf das wenigstens eine optische Sendeelement (13) das Positionier- und Fixierelement (25) mit seiner zweiten Anschlagsfläche in Anschlag mit einer ersten Anschlagsfläche des Trägerelements (9) gebracht und dann zur Optimierung der transversalen Position des wenigstens einen Einkoppelendes (19) in Bezug auf das wenigstens eine optische Sendeelement (13) transversal justiert und anschließend fest mit dem Trägerelement verbunden,
d) das vorkonfektionierte Teilmodul (7) wird außerhalb des Gehäuses (3) hinsichtlich seiner Funktionsfähigkeit geprüft und anschließend in das Gehäuse (3) eingebaut, wobei das Verfahren **dadurch** characterisiert ist, dass das Einkoppelende Zuerst im Positionier- und Fixierelement fixiert wird und daran auschließend genan abgelängt wird; so dass die Stirnfläche des betueffenden Einkoppel endes einen definierten Abstand zu einer zweiten Auschlagsfläche des Positionier- und Fixierelements aufweist, wobei nach einem genauen Ablängen des Einkoppelendes des Lichtwellenleiters in Bezug auf die Anschlagfläche des Positionier- und Fixierelements ein axiales Ausrichten des Einkoppelendes entfallen kann.

2. Verfahren nach Anspruch 1, **dadurch gekennzeichnet, dass** das Gehäuse (3) mit elektrischen Anschlusskontakten (5) für das Zuführen und/oder Abführen elektrischer Signale oder das Zuführen elektrischer Energie versehen wird.

3. Verfahren nach Anspruch 1, **dadurch gekennzeichnet, dass** für das Trägerelement (9) ein gut wärmeleitendes Material, beispielsweise Kupfer, verwendet wird und das Trägerelement (9) wärmeleitend mit dem Gehäuse (3) oder einem Kühlelement verbunden wird.

4. Verfahren nach Anspruch 1 oder 3, **dadurch gekennzeichnet, dass** das wenigstens eine optische Sendeelement (13) auf einem Substrat (11) angeordnet oder ausgebildet wird, welches mit dem Trägerelement (9) verbunden wird.

5. Verfahren nach Anspruch 1, **dadurch gekennzeichnet, dass** das Positionier- und Fixierelement (25) eine Ferrule (21) umfasst, in welcher das wenigstens eine Einkoppelende (19) gehalten wird.

6. Verfahren nach Anspruch 5, **dadurch gekennzeichnet, dass** das Positionier- und Fixierelement (25) ein Aufnahmeteil (23) umfasst, welches die zweite Anschlagfläche definiert, und dass die Ferrule (21) in einer Bohrung im Aufnahmeteil (23) gehalten, vorzugsweise eingepresst wird.

7. Verfahren nach einem der Ansprüche 1, 3 oder 4, **dadurch gekennzeichnet, dass** im Positionier- und Fixierelement (25) oder einem damit verbundenen Teil wenigstens eine V-Nut zur Aufnahme des wenigstens einen Einkoppelendes (19) ausgebildet wird.

8. Verfahren nach Anspruch 1 oder 3, **dadurch gekennzeichnet, dass** wenigstens ein optisches Sendeelement auf dem Trägerelement (9) angeordnet wird und dass im Trägerelement (9) wenigstens eine V-Nut zur Aufnahme und Positionierung des wenigstens einen Einkoppelendes ausgebildet wird.

9. Verfahren nach einem der vorhergehenden Ansprüche, **dadurch gekennzeichnet, dass** zumindest der Raum zwischen der emittierenden Fläche des wenigstens einen optischen Sendeelements (13) und der Stirnfläche des diesem Sendeelement zugeordneten Einkoppelendes (19) mit einem transparenten Material, vorzugsweise einer transparenten Vergussmasse, ausgefüllt wird.

10. Verfahren nach einem der vorhergehenden Ansprüche, **dadurch gekennzeichnet, dass** als optisches Sendeelement (19) ein Halbleiterlaser-Chip verwendet wird, welcher vorzugsweise eine im Chip integrierte Fleckaufweitung mittels einer Taperstruktur aufweist.

11. Verfahren nach Anspruch 10, **dadurch gekennzeichnet, dass** im Einkoppelende des wenigstens einen Lichtwellenleiters (17) ein Fasergitter zur Bildung eines Fiber-Grating-Lasers ausgebildet wird.

12. Verfahren nach einem der vorhergehenden Ansprüche, **dadurch gekennzeichnet, dass** als Gehäuse (3) ein nicht-hermetisch dichtes Gehäuse verwendet wird.

## Claims

1. Method of manufacturing an optoelectronic transmitter module, which comprises the following steps:
a) a supporting element (9) is prefabricated to form a submodule (7) outside of a housing (3) with at least one optical transmitter element (13) and at least one coupling end (19) of an optical waveguide (17), which end is held in a positioning and fixing element (25),
b) wherein the at least one coupling end (19) is fixed in a positioning and fixing element (25),
c) then, to position the at least one coupling end (19) in relation to the at least one optical transmitter element (13) axially, the positioning and fixing element (25) is moved up against a first stop surface of the supporting element (9) with its second stop surface and then is transversally adjusted to optimise the transversal position of the at least one coupling end (19) in relation to the at least one optical transmitter element (13) and then securely connected to the supporting element,
d) the prefabricated submodule (7) is tested outside of the housing (3) with regard to its operability and is then integrated in the housing (3), wherein the method is **characterised in that** the coupling end is first fixed in the positioning and fixing element (25) and then cut to the exact length so that the front surface of the coupling end affected has a definite distance to a second stop surface of positioning and fixing element, wherein, once the coupling end of the optical waveguide has been cut to an exact length in relation to the stop surface of the positioning and fixing element, axial alignment of the coupling end can be dispensed with.

2. Method according to Claim 1, **characterised in that** the housing (3) is provided with electrical terminal contacts (5) for the supply and/or redirecting of electrical signals or the supply of electrical energy.

3. Method according to Claim 1, **characterised in that** a good thermoconductive material, for example copper, is used for the supporting element (9) and the supporting element (9) is connected to the housing (3) or a cooling element in a thermoconductive manner.

4. Method according to Claims 1 or 3, **characterised in that** the at least one optical transmitter element (13) is accommodated or configured on a substrate (11) which is connected to the supporting element (9).

5. Method according to Claim 1, **characterised in that** the positioning and fixing element (25) comprises a ferrule (21) in which the at least one coupling end (19) is held.

6. Method according to Claim 5, **characterised in that** the positioning and fixing element (25) comprises a retaining part (23), which defines the second stop surface, and that the ferrule (21) is held in, preferably pressed into, a boring of the retaining part (23).

7. Method according to Claims 1, 3 or 4 **characterised in that** at least one V groove is configured in the positioning and fixing element (25) or a part connected thereto to accommodate the at least one coupling end (19).

8. Method according to Claims 1 or 3, **characterised in that** at least one optical transmitter element is arranged on the supporting element (9) and that at least one V groove is configured in the supporting element (9) to accommodate and position the at least one coupling end.

9. Method according to one of the previous claims, **characterised in that** at least the space between the emitting surface of the at least one optical transmitter element (13) and the front surface of the coupling end (19) assigned to this transmitter element is filled with a transparent material, preferably a transparent potting compound.

10. Method according to one of the previous claims, **characterised in that** a semiconductor laser chip, which preferably comprises a spot broadening integrated in the chip by means of a taper structure, is used as an optical transmitter element (13).

11. Method according to Claim 10, **characterised in that** a fibre grating is configured in the coupling end of the at least one optical waveguide (17) to create a fibre grating laser.

12. Method according to one of the previous claims, **characterised in that** a non-hermetically sealed housing is used as the housing (3).

## Revendications

1. Procédé de fabrication d'un module d'émission optoélectronique, qui présente les étapes suivantes:
a) un élément support (9) est préconfectionné à l'extérieur d'un boîtier (3) avec au moins un élément d'émission (13) optique et au moins une extrémité d'injection (19), maintenue dans un élément de positionnement et de fixation (25), d'un guide d'ondes optiques (17), en un module partiel (7),
b) la au moins une extrémité d'injection (19) étant fixée dans l'élément de positionnement et de fixation (25),
c) ensuite, pour le positionnement axial de la au moins une extrémité d'injection (19) par rapport à le au moins un élément d'émission (13) optique, l'élément de positionnement et de fixation (25) est amené avec sa seconde surface de butée en butée avec une première surface de butée de l'élément support (9) et ensuite, pour l'optimisation de la position transversale de la au moins une extrémité d'injection (19) par rapport à le au moins un élément d'émission (13) optique, est ajusté transversalement et relié ensuite de façon fixe à l'élément support,
d) le module partiel (7) préconfectionné est testé à l'extérieur du boîtier (3) en ce qui concerne sa capacité de fonctionnement et intégré ensuite dans le boîtier (3), le procédé étant **caractérisé en ce que** l'extrémité d'injection est fixée d'abord dans l'élément de positionnement et de fixation et est coupée ensuite exactement à la longueur ensuite, de sorte que la face frontale de l'extrémité d'injection concernée présente une distance définie à une seconde surface de butée de l'élément de positionnement et de fixation, une orientation axiale de l'extrémité d'injection pouvant être supprimée après une mise à la longueur précise de l'extrémité d'injection du guide d'ondes optiques par rapport à la surface de butée de l'élément de positionnement et de fixation.

2. Procédé selon la revendication 1, **caractérisé en ce que** le boîtier (3) est doté de contacts de branchement (5) électriques pour l'arrivée et/ou l'évacuation de signaux électriques ou l'arrivée d'énergie électrique.

3. Procédé selon la revendication 1, **caractérisé en ce qu'**un matériau bon électroconducteur, par exemple du cuivre, est utilisé pour l'élément support (9) et l'élément support (9) est relié de façon tellement conductrice au boîtier (3) ou à un élément de refroidissement.

4. Procédé selon la revendication 1 ou 3, **caractérisé en ce que** le au moins un élément d'émission (13) optique est disposé ou réalisé sur un substrat (11) qui est relié à l'élément support (9).

5. Procédé selon la revendication 1, **caractérisé en ce que** l'élément de positionnement et de fixation (25) comporte une ferrule (21) dans laquelle la au moins une extrémité d'injection (19) est maintenue.

6. Procédé selon la revendication 5, **caractérisé en ce que** l'élément de positionnement et de fixation (25) comporte une partie de logement (23) qui définit la seconde surface de butée et **en ce que** la ferrule (21) est maintenue, de préférence enfoncée, dans un perçage dans la partie de logement (23).

7. Procédé selon l'une quelconque des revendications 1, 3 ou 4, **caractérisé en ce que** au moins une rainure en V pour le logement de la au moins une extrémité d'injection (19) est réalisée dans l'élément de positionnement et de fixation (25).

8. Procédé selon la revendication 1 ou 3, **caractérisé en ce qu'**au moins un élément d'émission optique est disposé sur l'élément support (9) et au moins une rainure en V pour le logement et le positionnement de la au moins une extrémité d'injection est réalisée dans l'élément support (9).

9. Procédé selon l'une quelconque des revendications précédentes, **caractérisé en ce qu'**au moins l'espace entre la surface émettrice du au moins un élément d'émission (13) optique et la surface frontale de l'extrémité d'injection (19) attribuée à cet élément d'émission est rempli avec un matériau transparent, de préférence une masse de scellement transparente.

10. Procédé selon l'une quelconque des revendications précédentes, **caractérisé en ce qu'**une puce laser semiconducteur, qui présente de préférence un élargissement de spot intégré dans la puce au moyen d'une structure de "taper", est utilisée comme élément d'émission (19) optique.

11. Procédé selon la revendication 10, **caractérisé en ce qu'**une grille à fibre est réalisée dans l'extrémité d'injection du au moins un guide d'ondes optiques (17) pour la formation d'un laser de Fiber-Grating.

12. Procédé selon l'une quelconque des revendications précédentes, **caractérisé en qu'**un boîtier étanche de façon non hermétique est utilisé comme boîtier (3).
